# EUROPÄISCHE PATENTANMELDUNG

(11) **EP 3 705 368 A1**
(43) Veröffentlichungstag der Anmeldung: **09.09.2020**
(21) Anmeldenummer: 20152093.9
(22) Anmeldetag: 16.01.2020
(51) Int. Cl.: B60W 30/095, G01S 13/931, G01S 17/931, G01S 17/42, G05D 1/02, B60W 30/09

(54) **ÜBERWACHUNGSVORRICHTUNG**

(30) Priorität: 04.03.2019 DE 202019101201 U
(71) Anmelder: Leuze electronic GmbH + Co. KG, 73277 Owen/Teck (DE)
(72) Erfinder: Brunner, Rolf, 82223 Eichenau (DE); Quapil, Gerald, 73277 Owen/Teck (DE)
(74) Vertreter: Ruckh, Rainer Gerhard

(57) **Zusammenfassung**

Die Erfindung betrifft eine Überwachungsvorrichtung (1) für eine mobile Maschine, mit einem an der mobilen Maschine angeordneten Sensor (3) und einer die mobile Maschine steuernden Steuerung (4). Der Sensor (3) ist ausgebildet, Objekte (20) in einem Schutzfeld (5) zu erfassen, wobei der Sensor (3) bei Detektion eines Objekts (20) im Schutzfeld (5) ein Sicherheitssignal für die mobile Maschine generiert. Mit dem Sensor (3) werden Positionen von außerhalb des Schutzfelds (5) angeordneten Hindernissen (7) ermittelt. Abhängig hiervon wird eine Umfahrungstrajektorie (8) für die mobile Maschine derartig berechnet, dass die entlang der Umfahrungstrajektorie (8) bewegte mobile Maschine das Hindernis (7) ohne Schutzfeld-Verletzung umfährt.

## Beschreibung

Die Erfindung betrifft eine Überwachungsvorrichtung.

Derartige Überwachungsvorrichtungen werden insbesondere zur Gefahrenbereichsüberwachung an gefahrbringenden Anlagen eingesetzt. Ein Gefahrenbereich an einer solchen Anlage wird mit einem optischen Sensor überwacht, der allgemein als scannender Sensor derart ausgebildet ist, dass mit den Lichtstrahlen einer Sende-/Empfangseinheit dieses optischen Sensors periodisch ein Überwachungsbereich abgetastet wird. Insbesondere kann der optische Sensor als Flächendistanzsensor, das heißt scannender Distanzsensor ausgebildet sein, mit welchem Positionen von Objekten im Überwachungsbereich bestimmt werden können.

Bei bekannten Überwachungsvorrichtungen werden scannende optische Sensoren derart eingesetzt, dass mit diesen eine Objektüberwachung nicht im gesamten Überwachungsbereich sondern nur innerhalb eines vorgegebenen Schutzfelds erfolgt. Das Schutzfeld ist als Parameter im optischen Sensor gespeichert, wobei deren Dimension an den zu überwachenden Gefahrenbereich bestmöglich angepasst wird.

Die Auswertung der mit dem optischen Sensor generierten Messdaten erfolgt im optischen Sensor. Hierzu ist im optischen Sensor eine Auswerteeinheit integriert, die die am Ausgang eines Empfängers der Sende-/Empfangseinheit anstehenden Empfangssignale auswertet. Dabei wird ein binäres Objektfeststellungssignal generiert, dessen Schaltzustände angeben, ob sich innerhalb des Schutzfeldes ein Objekt befindet.

Dieses Objektfeststellungsignal wird an eine Steuerung ausgegeben, die die Anlage steuert. Wird ein Objektfeststellungssignal ausgegeben, das signalisiert, dass kein Objekt im Schutzfeld vorhanden ist, wird der Betrieb der Anlage frei gegeben. Generiert der optische Sensor ein Objektfeststellungssignal mit dem Schaltzustand, der einer Objektdetektion im Schutzfeld entspricht, wird durch dieses Objektfeststellungsignal die Anlage mittels der Steuerung stillgesetzt, um Gefahrenzustände zu vermeiden.

Die Überwachungsvorrichtung kann insbesondere zur Vorfeldüberwachung einer mobilen Maschine wie einem Fahrzeug, beispielsweise einem fahrerlosem Transportsystem eingesetzt werden. Bei derartigen Systemen muss die Gefahrenbereichsüberwachung an die jeweilige Fahrsituation angepasst werden. Insbesondere muss gewährleistet sein, dass das Fahrzeug stationäre Hindernisse umfahren kann, ohne dass diese in das Schutzfeld ragen und einen unnötigen Notstopp des Fahrzeugs verursachen.

Dies wird dadurch erreicht, dass im optischen Sensor unterschiedliche Schutzfelder abgespeichert sind, wobei je nach Fahrsituation das am besten geeignete Schutzfeld aktiviert wird.

Nachteilig hierbei ist, dass mit der begrenzten Anzahl an Schutzfeldern keine ausreichende Anpassung an sich ändernde Randbedingungen möglich ist.

Weiterhin ist auch ein unerwünscht hoher Aufwand erforderlich, um im Bedarfsfall geeignete Schutzfelder auszuwählen und zu aktivieren.

Der Erfindung liegt die Aufgabe zugrunde, eine Überwachungsvorrichtung mit erhöhter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungsvorrichtung für eine mobile Maschine, mit einem an der mobilen Maschine angeordneten Sensor und einer die mobile Maschine steuernden Steuerung. Der Sensor ist ausgebildet, Objekte in einem Schutzfeld zu erfassen, wobei der Sensor bei Detektion eines Objekts im Schutzfeld ein Sicherheitssignal für die mobile Maschine generiert. Mit dem Sensor werden Positionen von außerhalb des Schutzfelds angeordneten Hindernissen ermittelt. Abhängig hiervon wird eine Umfahrungstrajektorie für die mobile Maschine derartig berechnet, dass die entlang der Umfahrungstrajektorie bewegte mobile Maschine das Hindernis ohne Schutzfeld-Verletzung umfährt.

Ein wesentlicher Vorteil der Erfindung besteht darin, dass mit dem Sensor der Überwachungsvorrichtung sowohl eine Gefahrenbereichsüberwachung als auch eine Navigationsfunktion für die mobile Maschine durchgeführt wird, so dass der konstruktive Aufwand der Überwachungsvorrichtung sehr gering gehalten werden kann.

Die mit dem Sensor durchgeführte Gefahrenbereichsüberwachung ist derart ausgestaltet, dass in dem Sensor ein Schutzfeld aktiviert ist, das auf ein Eindringen von Objekten überwacht wird. Wird mit dem Sensor ein Objekteingriff im Schutzfeld registriert, generiert der Sensor ein Sicherheitssignal, das an die Steuerung ausgegeben wird. Die Steuerung löst darauf eine entsprechende Sicherheitsfunktion aus, insbesondere derart, dass die mobile Maschine angehalten wird. Die mobile Maschine kann beispielsweise von einem Fahrzeug, insbesondere einem fahrerlosen Transportsystem, oder von einem mobilen Roboter gebildet sein.

Durch diese Gefahrenbereichsüberwachung werden gefahrbringende Kollisionen der mobilen Maschine vermieden. Vorteilhaft wird die so ausgebildete Überwachungsvorrichtung im Bereich der Sicherheitstechnik eingesetzt. Zur Erfüllung der hierfür geltenden normativen Anforderungen sind der Sensor als Sicherheitssensor und die Steuerung als Sicherheitssteuerung ausgebildet, d. h. sie weisen einen fehlersicheren Aufbau auf.

Erfindungsgemäß wird mit dem zur Gefahrenbereichsüberwachung eingesetzten Sensor auch eine automatische Umfahrung von Hindernissen ermöglicht.

Hierzu erfasst der Sensor Hindernisse außerhalb des Schutzfelds, wobei der Sensor die Positionen und auch Größen des jeweiligen Hindernisses vorteilhaft fortlaufend bestimmt.

Abhängig von den mit dem Sensor erfassten Messwerten für das Hindernis wird dann eine Umfahrungstrajektorie berechnet, d. h. eine Bahn der mobilen Maschine, auf welcher die mobile Maschine das Hindernis sicher umfahren kann, vorgegeben wird.

Die Umfahrungstrajektorie wird dabei in Kenntnis eines Zielorts berechnet, auf welchen die mobile Maschine zubewegt werden soll. Die Umfahrungstrajektorie wird mit einem bekannten Algorithmus, z. B. einem Bezier-Algorithmus, vorteilhaft so durchgeführt, dass der durch das Hindernis bedingte Umweg auf der Fahrt zum Zielort minimal ist.

Ein wesentlicher Aspekt der Erfindung besteht darin, dass die Umfahrungstrajektorie so berechnet wird, dass das Hindernis bei der Umfahrung mit der mobilen Maschine nicht in das Schutzfeld eindringt. Damit wird vermieden, dass das Hindernis durch ein Eindringen in das Schutzfeld zur Generierung eines Sicherheitssignals und damit zu einem unnötigen Notstopp der mobilen Maschine führt.

Die Umfahrungstrajektorie ist somit so gewählt, dass die Verfügbarkeit der mobilen Maschine nicht unnötig reduziert wird.

Besonders vorteilhaft wird die Umfahrungstrajektorie derart berechnet, dass die mobile Maschine das Hindernis mit kleinstmöglichen Abstand zum Schutzfeld umfährt.

Die Umfahrungstrajektorie wird also so gewählt, dass der durch das Hindernis bedingte Umweg der mobilen Maschine auf der Fahrt zum Zielort minimal ist.

Gemäß einer vorteilhaften Ausführungsform ist die mobile Maschine entlang einer Fahrbahn verfahrbar und die Umfahrungstrajektorie wird so berechnet, dass die mobile Maschine die Fahrbahn nicht verlässt.

Die Soll-Fahrtroute auf der Fahrbahn kann in der Steuerung vorgegeben sein und/oder mit dem Sensor kontrolliert werden. Diese Daten gehen dann in die Berechnung der Umfahrungstrajektorie ein, so dass diese so berechnet wird, dass, soweit möglich, die mobile Maschine bei Umfahren des Hindernisses stets auf der Fahrbahn bleibt.

Gemäß einer ersten Variante wird die Umfahrungstrajektorie im Sensor berechnet.

Die im Sensor berechnete Umfahrungstrajektorie wird dann über eine geeignete Schnittstelle an die Steuerung ausgegeben, so dass die Steuerung die mobile Maschine entlang der Umfahrungstrajektorie führen kann.

Gemäß einer zweiten Variante überträgt der Sensor Messdaten an die Steuerung und die Umfahrungstrajektorie wird in der Steuerung berechnet.

In diesem Fall sendet der Sensor an die bei der Detektion des Hindernisses ermittelten Messdaten über eine geeignete Schnittstelle an die Steuerung. Die Steuerung berechnet dann aus diesen Messdaten die Umfahrungstrajektorie und steuert die mobile Maschine entsprechend.

Der Sensor ist vorteilhaft als Distanzsensor ausgebildet, so dass mit diesen Positionen von Objekten erfasst werden können.

Weiter vorteilhaft ist der Sensor als scannender Sensor ausgebildet, d. h. ein Abtaststrahl wird periodisch innerhalb eines Erfassungsbereichs abgelenkt. Dabei kann der Erfassungsbereich ein Raumbereich oder ein flächiger Bereich sein.

Generell kann der Sensor ein Radarsensor, ein Ultraschallsensor oder ein optischer Sensor sein.

Durch die Ausbildung des Sensors als Distanzsensors kann dieser die Positionen und Größen von Hindernissen bestimmen. Diese analogen Messdaten werden zur Berechnung der Umfahrungstrajektorie verwendet.

Weiterhin generiert der Sensor ein binäres Objektfeststellungssignal, dessen Schaltzustände angeben, ob sich ein Objekt im Schutzfeld befindet oder nicht, wobei das Objektfeststellungssignal das Sicherheitssignal ausbildet.

Spezifisch bildet das Objektfeststellungssignal, wenn es den Schaltzustand "Objekt im Schutzfeld vorhanden" einnimmt, das Sicherheitssignal.

Zur Erfassung von Objekten im Schutzfeld werden die von einem Objekt stammenden Distanzwerte des Sensors mit den Abmessungen des Schutzfelds verglichen, um daraus das binäre Objektfeststellungssignal zu generieren.

Die Erfindung wird im Folgenden anhand der Zeichnungen erläutert. Es zeigen:
- Fig. 1:: Ausführungsbeispiel der erfindungsgemäßen Überwachungsvorrichtung an einem entlang einer Fahrbahn verfahrbaren Fahrzeug.
- Fig. 2:: Erstes Ausführungsbeispiel des Sensors für die Überwachungsvorrichtung gemäß Figur 1.
- Fig. 3:: Zweites Ausführungsbeispiel des Sensors für die Überwachungsvorrichtung gemäß Figur 1.
- Fig. 4a, 4b:: Darstellungen einer Überwachungsvorrichtung mit einem mittig an einem Fahrzeug montierten Sensor bei einer Hindernisumfahrung.
- Fig. 5a, 5b:: Darstellung einer Überwachungsvorrichtung mit einem an einem Fahrzeugeck montierten Sensor bei einer Hindernisumfahrung.

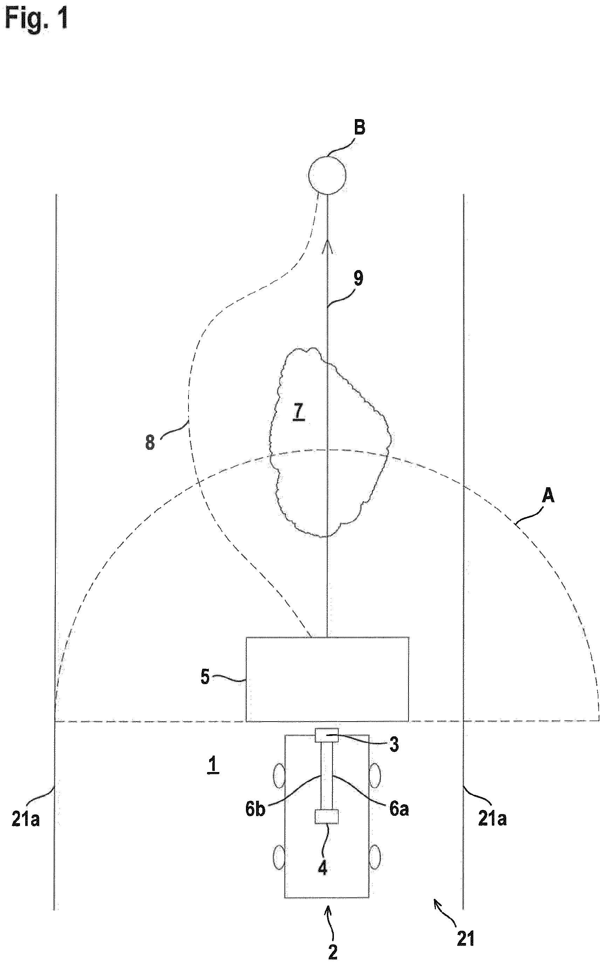

Figur 1 zeigt ein Ausführungsbeispiel der erfindungsgemäßen Überwachungsvorrichtung 1 für eine mobile Maschine.

Die mobile Maschine ist von einem Fahrzeug 2 gebildet, das z. B. als fahrbares Transportsystem ausgebildet ist. Alternativ kann die mobile Maschine auch ein mobiler Roboter sein.

Die Überwachungsvorrichtung 1 umfasst einen Sensor 3 und eine Steuerung 4, die auf dem Fahrzeug 2 angeordnet sind. Zur Erfüllung der Anordnungen für einen Einsatz im Bereich der Sicherheitstechnik weisen diese einen fehlersicheren Aufbau auf, so dass der Sensor 3 als Sicherheitssensor und die Steuerung 4 als Sicherheitssteuerung ausgebildet sind.

Entsprechend der Reichweite der Sensorkomponenten kann mit dem Sensor 3 innerhalb eines Messfelds A eine Objekterkennung erfolgen. Im Sensor 3 ist ein Schutzfeld 5 abgespeichert und aktiviert, das innerhalb des Messfelds A liegt. Durch eine Objekterfassung im Schutzfeld 5 erfolgt eine Gefahrenbereichsüberwachung im Vorfeld des Fahrzeugs 2.

Wird im Sensor 3 ein Objekteingriff im Schutzfeld 5 registriert, generiert der Sensor 3 ein Sicherheitssignal, das über einen sicheren Ausgang des Sensors 3 und eine erste Zuleitung 6a an die Steuerung 4 ausgegeben wird. Enthält die Steuerung 4 vom Sensor 3 ein solches Sicherheitssignal führt sie einen Notstopp des Fahrzeugs 2 durch, um eine Gefahrensituation zu vermeiden.

Weiterhin wird mit dem Sensor 3 fortlaufend eine Hinderniserkennung durchgeführt. Figur 1 zeigt ein solches Hindernis 7, das außerhalb des Schutzfelds 5 liegt. Der Sensor 3 bestimmt fortlaufend die Position und Größe, insbesondere Breite des Hindernisses 7.

Abhängig von der Erkennung des Hindernisses 7 wird eine Umfahrungstrajektorie 8 berechnet, d. h. eine Bahn für das Fahrzeug 2, mit der das Hindernis 7 umfahren werden kann.

Figur 1 zeigt die Soll-Route 9 des Fahrzeugs 2 zu einem Zielort B. Durch das Hindernis 7 ist ein Abweichen von der Soll-Route 9 erforderlich. Die entsprechende Umfahrungstrajektorie 8 kann im Sensor 3 berechnet und dann an die Steuerung 4 übertragen werden. Alternativ werden vom Sensor 3 an die Steuerung 4 Messdaten übertragen, so dass dann in der Steuerung 4 die Umfahrungstrajektorie 8 berechnet wird.

In beiden Fällen weisen der Sensor 3 und die Steuerung 4 geeignete Schnittstellen auf, die über eine zweite Zuleitung 6b verbunden sind, über welche die entsprechenden Daten übertragen werden können.

Während die Auswertung der Sicherheitssignals zwingend in der Sicherheitssteuerung erfolgt, können die Sensorsignale zur Hinderniserkennung in einer anderen Steuerung, beispielsweise in einem Standard-PC ausgewertet werden. Diese Steuerung muss nicht fehlersicher sein.

Der Sensor 3 der Überwachungsvorrichtung 1 ist als Distanzsensor ausgebildet. Um im flächigen Messfeld A Objektdetektionen vornehmen zu können, ist der Sensor 3 vorteilhaft als scannender Sensor ausgebildet. Der Sensor 3 kann prinzipiell als Radarsensor oder Ultraschallsensor ausgebildet sein. Im vorliegenden Fall ist der Sensor 3 als optischer Sensor ausgebildet.

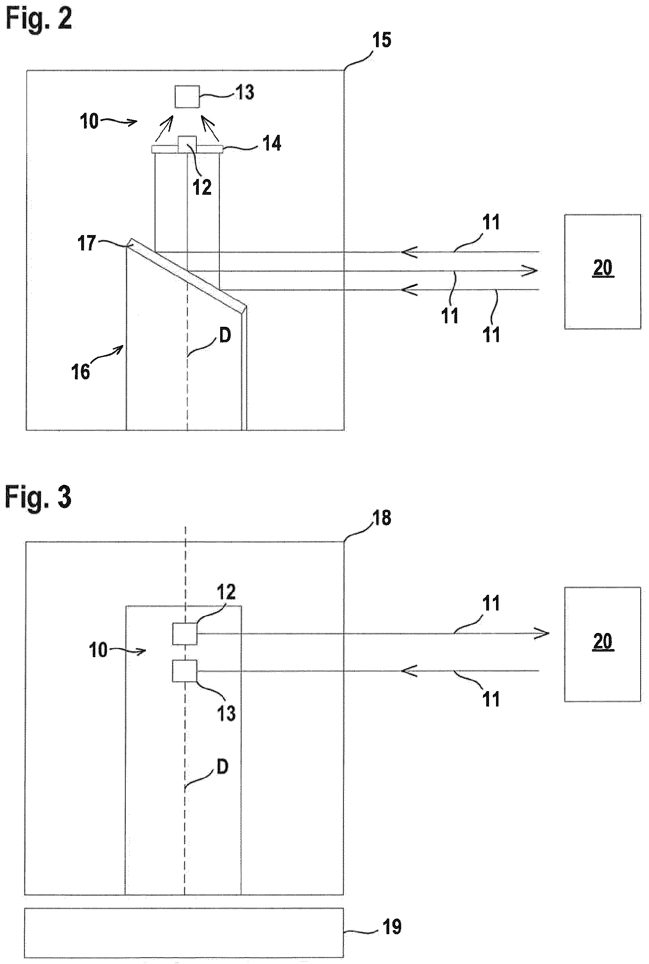

Figur 2 zeigt ein erstes Ausführungsbeispiel des in Form eines optischen Sensors ausgebildeten Sensors 3. Der optische Sensor weist eine Sende-/Empfangseinheit 10 mit einem Lichtstrahlen 11 emittierenden Sender 12 und einem Lichtstrahlen 11 empfangenden Empfänger 13 auf. Der Sender 12 ist zum Beispiel von einer Laserdiode gebildet, der Empfänger 13 ist zum Beispiel von einer Photodiode gebildet. Dem Empfänger 13 ist eine Empfangsoptik 14 zugeordnet. Die Sende-/Empfangseinheit 10 ist stationär in einem Gehäuse 15 integriert.

Ebenfalls im Gehäuse 15 ist eine Ablenkeinheit 16 vorgesehen, die einen motorisch getriebenen, um eine Drehachse D drehbaren Umlenkspiegel 17 aufweist. Die vom Sender 12 emittierten Lichtstrahlen 11 und die von einem zu detektierenden Objekt 20 zurückreflektierten Lichtstrahlen 11 werden über den Umlenkspiegel 17 geführt. Durch die Drehbewegung des Umlenkspiegels 17 werden die Lichtstrahlen 11 periodisch im Messfeld A geführt. Mittels eines Winkelgebers wird die aktuelle Drehstellung des Umlenkspiegels 17 und somit die aktuelle Strahlenrichtung der Lichtstrahlen 11 erfasst.

Im vorliegenden Fall bildet die Sende-/Empfangseinheit 10 einen nach einem Puls-Laufzeit-Verfahren arbeitenden Distanzsensor. Hierzu wird die Laufzeit von Lichtimpulsen zu einem zu detektierenden Objekt 20 bestimmt. Der optische Sensor bildet somit einen Flächendistanzsensor.

In diesem Fall werden vom optischen Sensor als Messdaten die aktuellen Distanzwerte mit den aktuellen Strahlenrichtungen der Lichtstrahlen 11 ermittelt.

Generell weist der optische Sensor eine (nicht dargestellte) Auswerteeinheit auf, in welcher in Abhängigkeit der Empfangssignale des Empfängers 13 ein Objektfeststellungsignal generiert wird, welches über die Schnittstelle an die Steuerung 4 ausgegeben wird.

Figur 3 zeigt eine zweite Ausführungsform des optischen Sensors. In diesem Fall ist eine Sende-/Empfangseinheit 10 mit einem Lichtstrahlen 11 emittierenden Sender 12 und einem Lichtstrahlen 11 empfangenden Empfänger 13 in einem rotierenden Messkopf 18 angeordnet. Der um eine Drehachse D drehbare, und auf einem feststehenden Sockel 19 gelagerte Messkopf 18 bewirkt in diesem Fall die periodische Ablenkung der Lichtstrahlen 11 im Messfeld A. Ansonsten entspricht der optische Sensor gemäß Figur 3 der Ausführungsform gemäß Figur 2.

Im vorliegenden Fall ist der optische Sensor als Sicherheitssensor ausgebildet und weist einen fehlersicheren Aufbau auf. Insbesondere ist die Auswerteeinheit redundant aufgebaut, beispielsweise in Form zweier sich gegenseitig zyklisch überwachenden Rechnereinheiten.

Im vorliegenden Fall werden im optischen Sensor Objektfeststellungsignale in Form binärer Schaltsignale generiert, deren Schaltzustände angeben ob sich ein Objekt 20 im Schutzfeld 5 befindet oder nicht. Das Objektfeststellungssignal mit dem Schaltzustand "Objekt 20 im Schutzfeld 5 vorhanden" bildet das Sicherheitssignal.

Die bei der Hinderniserkennung mit dem Sensor 3 ermittelten Messdaten werden mit einem bekannten Algorithmus, beispielsweise einem Bezier-Algorithmus in die Umfahrungstrajektorie 8 umgerechnet.

Erfindungsgemäß wird die Umfahrungstrajektorie 8 so berechnet, dass mit dem Fahrzeug 2 eine Umfahrung des Hindernisses 7 derart erfolgt, dass das Hindernis 7 das Schutzfeld 5 nicht verletzt.

Dabei erfolgt die Berechnung der Umfahrungstrajektorie 8 derart, dass das Fahrzeug 2 mit dem Schutzfeld 5 möglichst dicht am Hindernis 7 vorbeigeführt wird, so dass der durch das Hindernis 7 bedingte Umweg zum Zielort B möglichst klein ist.

Wie Figur 1 zeigt, fährt das Fahrzeug 2 entlang einer Fahrbahn 21, die durch Fahrbahnbegrenzungen 21a begrenzt ist. Die Umfahrungstrajektorie 8 wird vorteilhaft so berechnet, das bei Verfahren entlang der Umfahrungstrajektorie 8 das Fahrzeug 2 stets auf der Fahrbahn 21 bleibt.

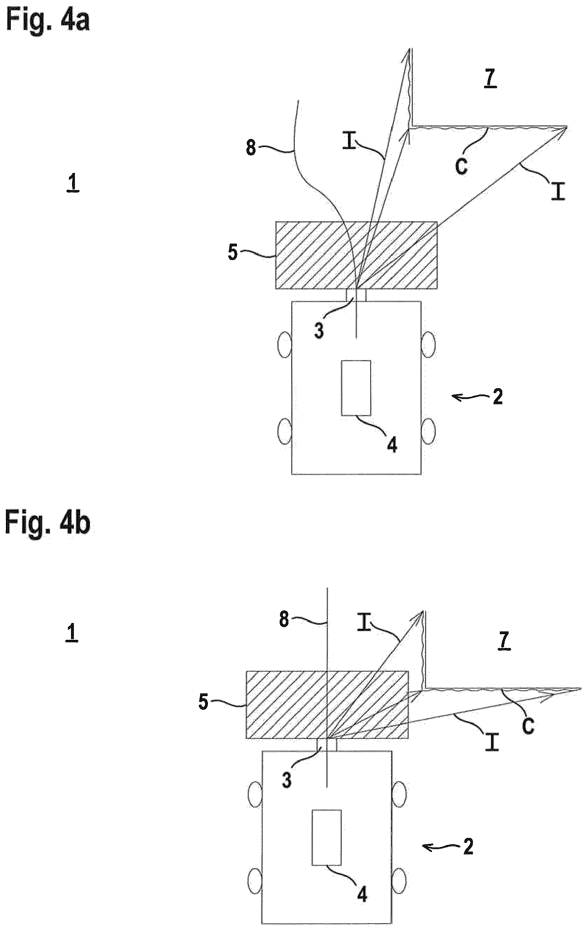

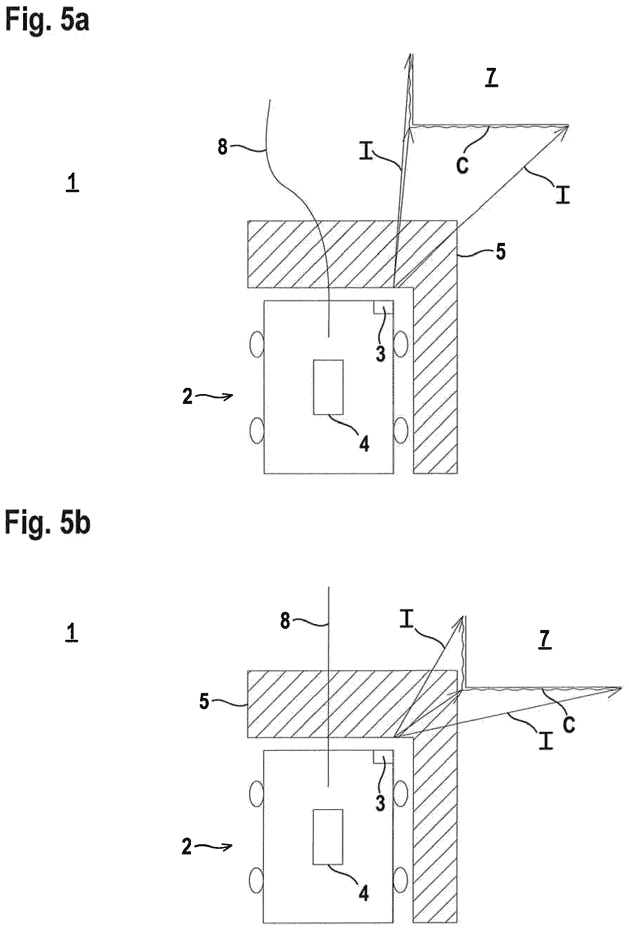

Die Figuren 4a, 4b und 5a, 5b zeigen Beispiele einer Hindernisumfahrung mit einem Fahrzeug 2, auf dem der Sensor 3 und die Steuerung 4 angeordnet sind.

Die Figuren 4a und 4b zeigen ein Ausführungsbeispiel, bei welchem der Sensor 3 mittig in der Frontseite des Fahrzeugs 2 montiert ist. Mit dem rechteckigen Schutzfeld 5 wird das Vorfeld des Fahrzeugs 2 überwacht.

Das stationäre Hindernis 7 kann von einem Maschinenteil oder Gebäudeteil gebildet sein. Mit den Pfeilen I sind spezifische Strahlrichtungen an den Lichtstrahlen 11 des Sensors 3 bei Abtastung der Seitenwand, der Ecke und der Frontwand des Hindernisses 7 dargestellt.

Mit der Bezugsziffer C sind schematisch die bei der Abtastung des Hindernisses 7 mit dem Sensor 3 tatsächlich erhaltenen Positionswerte C des Hindernisses 7 bezeichnet.

Figur 4a zeigt die abhängig vom Hindernis 7 berechnete Umfahrungstrajektorie 8. Figur 4b zeigt die Situation, wenn das Fahrzeug 2 gerade das Hindernis 7 passiert.

Wie aus den Figuren 4a, 4b ersichtlich, ist die Umfahrungstrajektorie 8 so berechnet, dass das Fahrzeug 2 mit minimalem Abstand des Schutzfelds 5 zum Hindernis 7 an diesem vorbeifährt, so dass das Hindernis 7 das Schutzfeld 5 nicht verletzt.

Die Figuren 5a, 5b zeigen eine Abwandlung des Ausführungsbeispiels gemäß der Figuren 4a, 4b. Im Unterschied zu dem Beispiel der Figuren 4a, 4b ist zwar der Sensor 3 an der rechten vorderen Ecke des Fahrzeugs 2 montiert. Dementsprechend erstreckt sich das Schutzfeld 5 nicht über das Vorfeld des Fahrzeugs 2 sondern auch entlang der rechten Seite.

Auch in diesem Fall wird die Umfahrungstrajektorie 8 so berechnet, dass das Fahrzeug 2 mit dem Schutzfeld 5 möglichst dicht am Hindernis 7 vorbeifährt, ohne dass das Hindernis 7 das Schutzfeld 5 verletzt.

### Bezugszeichenliste

- (1): Überwachungsvorrichtung
- (2): Fahrzeug
- (3): Sensor
- (4): Steuerung
- (5): Schutzfeld
- (6a): Zuleitung
- (6b): Zuleitung
- (7): Hindernis
- (8): Umfahrungstrajektorie
- (9): Soll-Route
- (10): Sende-/Empfangseinheit
- (11): Lichtstrahl
- (12): Sender
- (13): Empfänger
- (14): Empfangsoptik
- (15): Gehäuse
- (16): Ablenkeinheit
- (17): Umlenkspiegel
- (18): Messkopf
- (19): Sockel
- (20): Objekt
- (21): Fahrbahn
- (21a): Fahrbahnbegrenzung
- (A): Messfeld
- (B): Zielort
- (C): Positionswerte
- (D): Drehachse
- (I): Pfeile

## Patentansprüche

1. Überwachungsvorrichtung (1) für eine mobile Maschine, mit einem an der mobilen Maschine angeordneten Sensor (3) und einer die mobile Maschine steuernden Steuerung (4), wobei der Sensor (3) ausgebildet ist, Objekte (20) in einem Schutzfeld (5) zu erfassen und wobei der Sensor (3) bei Detektion eines Objekts (20) im Schutzfeld (5) ein Sicherheitssignal für die mobile Maschine generiert, **dadurch gekennzeichnet, dass** mit dem Sensor (3) Positionen von außerhalb des Schutzfelds (5) angeordneten Hindernissen (7) ermittelt werden und abhängig hiervon eine Umfahrungstrajektorie (8) für die mobile Maschine derartig berechnet wird, dass die entlang der Umfahrungstrajektorie (8) bewegte mobile Maschine das Hindernis (7) ohne Schutzfeld-Verletzung umfährt.

2. Überwachungsvorrichtung (1) nach Anspruch 1, **dadurch gekennzeichnet, dass** mit dem Sensor (3) fortlaufend die Position und Größe des Hindernisses (7) bestimmt wird.

3. Überwachungsvorrichtung (1) nach einem der Ansprüche 1 oder 2, **dadurch gekennzeichnet, dass** die Umfahrungstrajektorie (8) derart berechnet wird, dass die mobile Maschine das Hindernis (7) mit kleinstmöglichen Abstand zum Schutzfeld (5) umfährt.

4. Überwachungsvorrichtung (1) nach einem der Ansprüche 1 bis 3, **dadurch gekennzeichnet, dass** die mobile Maschine entlang einer Fahrbahn (21) verfahrbar ist, und dass die Umfahrungstrajektorie (8) so berechnet wird, dass die mobile Maschine die Fahrbahn (21) nicht verlässt.

5. Überwachungsvorrichtung (1) nach einem der Ansprüche 1 bis 4, **dadurch gekennzeichnet, dass** die Berechnung der Umfahrungstrajektorie (8) nach einem Bezier-Algorithmus durchgeführt ist.

6. Überwachungsvorrichtung (1) nach einem der Ansprüche 1 bis 5, **dadurch gekennzeichnet, dass** die Umfahrungstrajektorie (8) im Sensor (3) berechnet wird.

7. Überwachungsvorrichtung (1) nach einem der Ansprüche 1 bis 5, **dadurch gekennzeichnet, dass** der Sensor (3) Messdaten an die Steuerung (4) überträgt, und dass die Umfahrungstrajektorie (8) in der Steuerung (4) berechnet wird.

8. Überwachungsvorrichtung (1) nach einem der Ansprüche 1 bis 7, **dadurch gekennzeichnet, dass** mit dem Sicherheitssignal die mobile Maschine angehalten wird.

9. Überwachungsvorrichtung (1) nach einem der Ansprüche 1 bis 8, **dadurch gekennzeichnet, dass** der Sensor (3) ein binäres Objektfeststellungssignal generiert, dessen Schaltzustände angeben, ob sich ein Objekt (20) im Schutzfeld (5) befindet oder nicht, wobei das Objektfeststellungssignal das Sicherheitssignal ausbildet.

10. Überwachungsvorrichtung (1) nach Anspruch 9, **dadurch gekennzeichnet, dass** das Objektfeststellungssignal in die Steuerung (4) eingelesen wird.

11. Überwachungsvorrichtung (1) nach einem der Ansprüche 1 bis 10, **dadurch gekennzeichnet, dass** der Sensor (3) ein Sicherheitssensor und die Steuerung (4) eine Sicherheitssteuerung ist.

12. Überwachungsvorrichtung (1) nach einem der Ansprüche 1 bis 11, **dadurch gekennzeichnet, dass** der Sensor (3) ein Radarsensor, ein Ultraschallsensor oder ein optischer Sensor ist.

13. Überwachungsvorrichtung (1) nach einem der Ansprüche 1 bis 12, **dadurch gekennzeichnet, dass** der Sensor (3) ein Distanzsensor ist.

14. Überwachungsvorrichtung (1) nach einem der Ansprüche 1 bis 13, **dadurch gekennzeichnet, dass** der Sensor (3) ein scannender Sensor ist.

15. Überwachungsvorrichtung (1) nach einem der Ansprüche 1 bis 14, **dadurch gekennzeichnet, dass** die mobile Maschine ein Fahrzeug (2) oder ein mobiler Roboter ist.
